(19) Europäisches Patentamt
European Patent Office
Office européen des brevets

(11) **EP 4 249 891 B1**

(12) **EUROPÄISCHE PATENTSCHRIFT**

(45) Veröffentlichungstag und Bekanntmachung des Hinweises auf die Patenterteilung:
**02.07.2025  Patentblatt 2025/27**

(21) Anmeldenummer: **23161842.2**

(22) Anmeldetag: **14.03.2023**

(51) Internationale Patentklassifikation (IPC):
***G01N 15/02*** *(2024.01)*      *G01N 15/00* *(2024.01)*
***G01N 15/06*** *(2024.01)*

(52) Gemeinsame Patentklassifikation (CPC):
**G01N 15/0227;** G01N 15/075; G01N 2015/0046

(54) **VERFAHREN ZUR MESSWERTKORREKTUR BEI MESSUNGEN EINES PARTIKELVOLUMENSTROMS MITTELS SCHATTENFOTOGRAFIE**

METHOD FOR CORRECTING MEASUREMENT VALUES DURING MEASUREMENTS OF A PARTICLE VOLUME FLOW BY MEANS OF SHADOW PHOTOGRAPHY

PROCÉDÉ DE CORRECTION DE VALEUR DE MESURE LORS DE MESURES D'UN FLUX VOLUMIQUE DE PARTICULES À L'AIDE DE PHOTOGRAPHIE D'OMBRE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **15.03.2022  DE 102022105962
20.01.2023  DE 102023101395**

(43) Veröffentlichungstag der Anmeldung:
**27.09.2023  Patentblatt 2023/39**

(73) Patentinhaber: **Deutsches Zentrum für Luft- und Raumfahrt e.V.
53227 Bonn (DE)**

(72) Erfinder: **Allofs, Dirk
53227 Bonn (DE)**

(74) Vertreter: **dompatent von Kreisler Selting Werner -
Partnerschaft von Patent- und Rechtsanwälten mbB
Deichmannhaus am Dom
Bahnhofsvorplatz 1
50667 Köln (DE)**

(56) Entgegenhaltungen:
• **SANG YONG LEE ET AL: "Sizing of Spray Particles Using Image Processing Technique", JOURNAL OF MECHANICAL SCIENCE AND TECHNOLOGY, 1 June 2004 (2004-06-01), Seoul, pages 879 - 894, XP055214599, Retrieved from the Internet <URL:http://www.dbpia.co.kr/view/ ar_view.asp?arid=531871> DOI: 10.1007/ BF02990860**

**Beschreibung**

Die vorliegende Erfindung betrifft ein Verfahren zur Messwertkorrektur bei Messungen eines Partikelvolumenstroms mittels Schattenfotografie.

Für die Bestimmung der Partikelmassenkonzentration innerhalb einer Strömung ist die genaue Kenntnis der Partikelanzahl, der Partikelgröße, der Partikelgeschwindigkeit, der Partikeldichte der einzelnen Partikel sowie die präzise Bestimmung des Messvolumens erforderlich. Im Hinblick auf die Untersuchung von Partikel-Proben-Interaktionen in Überschallströmungen bietet das Schattenfotografieverfahren grundsätzlich viele Vorteile.

In aus dem Stand der Technik bekannten Schattenfotografieverfahren wird die Partikelgröße bestimmt, indem das Rohbild der Partikelschatten bei einem gegebenen Grenzwert binarisiert und anschließend die übrig gebliebenen Flecken bzw. Schatten als zweidimensionale Abbildung der Partikel vermessen werden. Die hierbei gemessenen Partikelgröße ist abhängig von dem gewählten Grenzwert zur Binarisierung. Alternativ wird anstelle der Binarisierung ein normierter Kontrastwert sowie die sogenannte Point Spread Function Width (PSF) verwendet.

Ein Nachteil bekannter Verfahren ist es, dass auf der Schattenfotografie abgebildeten Partikelschatten unscharf werden und größer erscheinen, wenn Sie außerhalb der Fokusebene der Schattenfotografieaufnahmevorrichtung liegen. Dies führt beispielsweise dazu, dass unscharfe Partikel als zu groß angenommen werden.

Aus Sang Yong Lee et al.: "Sizing of Spary Particles using image processing technique", Journal of Medical Science and Technology, 1. Juni 2004, Seiten 879-894 ist bereits ein Verfahren zur Messwertkorrektur bei Messungen eines Partikelvolumenstroms mittels Schattenfotografie umfassend die Oberbegriffsmerkmale des Anspruchs 1 bekannt geworden.

Des Weiteren sind diese Effekte abhängig von der Partikelgröße, wodurch das Messvolumen, bei denen Partikel die benötigte Schärfe aufweisen, ebenfalls von der Partikelgröße abhängt.

Aufgabe der vorliegenden Erfindung ist es, ein Verfahren zur Messwertkorrektur zu schaffen, welches abhängig von der Partikelgröße die ermittelte Partikelgröße sowie das Messvolumen korrigiert.

Eine weitere Aufgabe der vorliegenden Erfindung ist es, zusätzliche Einflüsse der gewählten Parameter, wie zum Beispiel dem des oben genannten Grenzwerts zur Binarisierung, zu kompensieren.

Zudem ist es eine Aufgabe der vorliegenden Erfindung ein Verfahren zur Messwertkorrektur zu schaffen, dass die Zählrate der einzelnen Partikelschatten berücksichtigt und ein Messvolumen ermittelt, bei dem die Zählrate der Partikel maximal bzw. bei dem eine Erkennung aller zu messenden Partikel sichergestellt ist. Die Aufgabe wird gelöst durch ein Verfahren gemäß Anspruch 1.

Durch das erfindungsgemäße Korrekturverfahren kann die Genauigkeit der berechneten Messwerte des Partikelvolumenstroms verbessert werden.

Vorzugsweise handelt es sich bei dem erfindungsgemäßen Verfahren zur Messwertkorrektur bei Messungen eines Partikelvolumenstroms mittels Schattenfotografie um ein computerimplementiertes Verfahren.

Vorzugsweise umfasst das Berechnen von Messwerten des Partikelvolumenstroms das Berechnen einer Partikelanzahl, einer Partikelkonzentration, eines gemessenen Partikeldurchmessers und/oder einer Partikelgeschwindigkeit.

Insbesondere ist das Berechnen von Messwerten des Partikelvolumenstroms nicht begrenzt auf die Berechnung der Partikelanzahl, der Partikelkonzentration, des gemessenen Partikeldurchmessers und/oder der Partikelgeschwindigkeit und es können auch weitere oder andere Messwerte ermittelt werden. Hierdurch kann die Wahl der berechneten Messwerte erfindungsgemäß abhängig von der aktuellen Anforderung gewählt werden. Dadurch können die Flexibilität und Effizienz des Verfahrens gesteigert werden.

Vorzugsweise umfasst das Kalibrieren die folgenden Schritte:

- Ermitteln einer Fokusebene der Schattenfotografieaufnahmevorrichtung, insbesondere entlang einer Objektivachse der Schattenfotografieaufnahmevorrichtung;
- Bereitstellen einer Kalibrierungsvorrichtung mit einer Vielzahl von Kalibrierungspunkten mit vordefinierten Kalibrierungspunktdurchmessern $d_{p\,real}$;
- Generieren von hochauflösenden Schattenfotografieaufnahmen der Kalibrierungsvorrichtung in vordefinierten Abständen $z_i$ zu der Fokusebene der Schattenfotografieaufnahmevorrichtung; und
- für jede der Vielzahl von Kalibrierungspunkten mit vordefinierten Kalibrierungspunktdurchmessern $d_{p\,real}$ und für jeden vordefinierten Abstand $z_i$ von der Fokusebene: Ermitteln von Kalibrierungspunktschatten und Ermitteln von gemessenen Kalibrierungspunktdurchmessern $d_{p\,roh}$ der Kalibrierungspunktschatten und Ermitteln einer Gradientenneigung $GS$ der jeweiligen Kalibrierungspunktschatten;
- Ermitteln einer maximalen Gradientenneigung $GS_{max}$ für jeden der Kalibrierungspunkschatten mit vordefinierten Kalibrierungspunktdurchmessern $d_{p\,real}$, wobei die maximale Gradientenneigung $GS_{max}$ einem oberen Grenzwert für die Gradientenneigung GS der Kalibrierungspunktschatten in Abhängigkeit des vordefinierten Kalibrierungspunktdurchmessers $d_{p\,real}$ entspricht;

- Ermitteln eines Verhältnisses zwischen den vordefinierten Kalibrierungspunktdurchmessern $d_{p\,real}$, den gemessenen Kalibrierungspunktdurchmessern $d_{p\,ron}$ und der Gradientenneigung $GS$ anhand der Vielzahl von vordefinierten Kalibrierungspunktdurchmessern $d_{p\,real}$ und der korrespondierenden gemessenen Kalibrierungspunktdurchmesser $d_{p\,roh}$ und der korrespondierenden Gradientenneigungen GS.

Vorzugsweise ergibt sich das Verhältnis des vordefinierten Kalibrierungspunktdurchmessers $d_{p\,real}$ und dem korrespondierenden gemessenen Kalibrierungspunktdurchmesser $d_{p\,roh}$ mit Gradientenneigung $GS$ und Parametern a, b und c aus:

$$\frac{d_{p\,roh}}{d_{p\,real}} = a + b * e^{-c*\frac{GS}{GS_{max}}}, \qquad a, b, c = f(d_{p\,real}).$$

Vorzugsweise sind die Parameter a, b und c abhängig von dem jeweiligen vordefinierten Kalibrierungspunktdurchmesser $d_{p\,real}$.

Vorzugsweise ergeben sich die Parameter a, b und c aus einer Ausgleichsrechnung bzw. Ausgleichung, insbesondere einer zweidimensionalen Ausgleichung des ermittelten Verhältnisses aus den vordefinierten Kalibrierungspunktdurchmessern $d_{p\,real}$ und korrespondierenden gemessenen Partikeldurchmessern $d_{p\,roh}$. Mit anderen Worten werden die Parameter a, b, c durch einen Fit aus dem ermittelten Verhältnis der vordefinierten Kalibrierungspunktdurchmessern $d_{p\,real}$ und korrespondierenden gemessenen Kalibrierungspunktdurchmesser $d_{p\,roh}$ ermittelt.

Vorzugsweise ergibt sich die maximale Gradientenneigung $GS_{max}$ mit Parametern f, g, h und i aus:

$$GS_{max} = f + \frac{g - f}{1 + (\frac{d_{p\,real}}{h})^i}.$$

Vorzugsweise ergeben sich die Parameter f, g, h und i aus einer Ausgleichsrechnung bzw. Ausgleichung. Insbesondere werden die Parameter f, g, h und i aus einem Fit des ermittelten Verhältnisses der vordefinierten Kalibrierungspunktdurchmesser $d_{p\,real}$ und korrespondierenden maximal gemessener Gradientenneigung $GS_{max}$ ermittelt.

Erfindungsgemäß umfasst das Kalibrieren ferner:

- für jeden der Vielzahl von vordefinierten Kalibrierungspunktdurchmessern $d_{p\,real}$: Ermitteln eines korrespondierenden Parameterbereichs, insbesondere anhand des ermittelten Verhältnisses des zwischen dem vordefinierten Kalibrierungspunktdurchmesser $d_{p\,real}$ und dem korrespondierenden gemessenen Kalibrierungspunktdurchmesser $d_{p\,roh}$ und der korrespondierenden Gradientenneigung GS, wobei jedem gemessenen Kalibrierungspunktdurchmesser $d_{p\,roh}$ mit korrespondierender Gradientenneigung $GS,$ der sich innerhalb dieses korrespondierenden Parameterbereichs befindet, ein korrigierter Kalibrierungspunktdurchmesser $d_{p\,korrigiert}$ zugeordnet wird, wobei der Wert des korrigierten Kalibrierungsdurchmessers $d_{p\,korrigiert}$ dem Wert des jeweiligen vordefinierten Kalibrierungspunktdurchmessers $d_{p\,real}$ dieses korrespondierenden Parameterbereichs entspricht;
- Begrenzung der ermittelten, korrespondierenden Parameterbereiche durch eine minimale Gradientenneigung $GS_{min}$.

Vorzugsweise weist der korrespondierende Parameterbereich eine vordefinierte Breite auf.

Die Breite des zu einem Kalibrierungspunktdurchmesser $d_{p\,real}$ korrespondierenden Parameterbereiches kann als zulässige Abweichung bzw. Variation des gemessenen Kalibrierungspunktdurchmesser $d_{p\,roh}$ um den Kalibrierungspunktdurchmesser $d_{p\,real}$ des Parameterbereiches gewählt werden, wobei sich eine untere Grenze des Parameterbereiches als $d_{p\,real}$ abzüglich der halben Breite und eine obere Grenze als $d_{p\,real}$ zuzüglich der halben Breite des Parameterbereiches ergibt.

Vorzugsweise weist jeder korrespondierende Parameterbereich für einen vordefinierten Kalibrierungspunktdurchmesser $d_{p\,real}$ die gleiche Breite auf.

Vorzugsweise weist die vordefinierte Breite des korrespondierenden Parameterbereichs einen Wert von im Wesentlichen 2.5 μm auf.

Vorzugsweise entspricht die minimale Gradientenneigung $GS_{min}$ einem unteren Grenzwert für die Gradientenneigung $GS$, bei der ein gemessener Kalibrierungspunktdurchmesser $d_{p\,roh}$ mit korrespondierender gemessener Gradientenneigung GS eindeutig einem der korrespondierenden Parameterbereiche eines vordefinierten Kalibrierungspunktdurchmessers $d_{p\,real}$ zugeordnet werden kann. Hierdurch wird sichergestellt, dass nur diejenigen Kombinationen aus gemessenem Kalibrierungspunktdurchmesser $d_{p\,roh}$ und korrespondierender gemessener Gradientenneigung GS in die Kalibrierung mit einfließen, bei denen eine eindeutige Zuordnung zu einem der Kalibrierungspunkte mit vordefinierten Kalibrierungspunktdurchmessern erfolgen kann.

Vorzugsweise ist der Wert der minimalen Gradientenneigung $GS_{min}$ abhängig von dem gemessenen Kalibrierungspunktdurchmesser $d_{p\,roh}$. Insbesondere ist der Wert der minimalen Gradientenneigung $GS_{min}$ für einen kleineren der gemessenen Kalibrierungspunktdurchmesser $d_{p\,roh}$ kleiner als für einen größeren gemessenen Kalibrierungspunktdurchmesser $d_{p\,roh}$.

Vorzugsweise umfasst das Korrigieren:

- für jeden gemessenen Partikeldurchmesser $d_{p\,roh}$: Ermitteln einer korrespondierenden Gradientenneigung $GS$ wobei die korrespondierende Gradientenneigung $GS$ größer ist als die minimale Gradientenneigung $GS_{min}$;

- Ermitteln des Parameterbereichs innerhalb dessen sich der gemessene Partikeldurchmesser $d_{p\,roh}$ und die korrespondierende Gradientenneigung $GS$ befinden;

- abhängig vom ermittelten Parameterbereich: Zuordnen eines korrigierten Partikeldurchmessers $d_{p\,korrigiert}$ für jeden der gemessenen Partikeldurchmesser $d_{p\,roh}$, wobei der Wert des korrigierten Partikeldurchmessers $d_{p\,korrigiert}$ dem Wert des vordefinierten Kalibrierungspunktdurchmessers $d_{p\,real}$ des Parameterbereichs entspricht.

Insbesondere wird angenommen, dass die vordefinierten Kalibrierungspunktdurchmesser $d_{p\,real}$ der wahren Größe der Kalibrierungspunkte entsprechen und entsprechend die korrespondierenden Parameterbereiche in Zusammenhang mit der wahren Größe der Kalibrierungspunkte stehen. Im Rahmen der Korrektur werden sodann denjenigen gemessenen Partikeldurchmessern $d_{p\,roh}$, die sich in einem korrespondierenden Parameterbereich eines vordefinierten Kalibrierungspunktdurchmessers $d_{p\,real}$ zugeordnet. Hierdurch wird die Genauigkeit der ermittelten Messwerte weiter verbessert.

Vorzugsweise ergibt sich die Genauigkeit der Ermittlung der korrigierten Partikeldurchmesser $d_{p\,korrigiert}$ aus:

$$\overline{\varepsilon_{d_{p\,korr}}} = \left| \frac{\sum_{i=1}^{n} \frac{d_{p\,korrigiert,i} - d_{p\,real}}{d_{p\,real}}}{n} \right|,$$

$$\sigma_{d_{p\,korr}} = \left| \sum_{i=1}^{n} \left( \frac{d_{p\,korrigiert,i} - d_{p\,real}}{d_{p\,real}} - \overline{\varepsilon_{d_{p\,korr}}} \right)^2 \right|.$$

Vorzugsweise weist die Schattenfotografieaufnahmevorrichtung einen Detektionswirkungsgrad CE auf und der Detektionswirkungsgrad ergibt sich aus:

$$CE = \frac{n_{p\,roh}}{n_{p\,ziel}},$$

wobei $n_{p\,roh}$ der Anzahl der gemessenen Kalibrierungspunktdurchmesser für einen vordefinierten Kalibrierungspunktdurchmesser $d_{p\,real}$ entspricht und $n_{p\,ziel}$ der Anzahl von Kalibrierungspunkten für einen vordefinierten Kalibrierungspunktdurchmesser $d_{p\,real}$ auf einem ausgewählten Bereich der Kalibrierungsvorrichtung entspricht.

Vorzugsweise erfolgt die Ermittlung des Detektionswirkungsgrads $CE$ auf Basis der hochauflösenden Schattenfotografieaufnahmen der Kalibrierungsvorrichtung, insbesondere im Rahmen des Kalibrierens.

Vorzugsweise kann der Detektionswirkungsgrad einen Wert zwischen 0% und 100% aufweisen. Insbesondere kann der Detektionswirkungsgrad in relativen Abständen $z_i$ von größer als 1.5 mm einen Wert von größer als 100 % aufweisen, da in diesem Fall unscharfe Partikelschatten fälschlicherweise aufgeteilt und als mehrere Partikel detektiert werden.

Vorzugsweise ist der Wert des Detektionswirkungsgrades $CE$ abhängig vom vordefinierten Abstand $z_i$ zu der Fokusebene der Schattenfotografieaufnahmevorrichtung und der Größe eines vordefinierten Kalibrierungspunktdurchmessers $d_{p\,real}$. Insbesondere werden umso weniger Partikel detektiert, desto größer ein relativer Abstand $z_i$ zu der Fokusebene ist. Wobei ein relativer Abstand $z_i$ zu der Fokusebene einen Abstand $z_i$ vor und/oder hinter der Fokusebene umfasst. Derjenige relative Abstand $z_i$ zu der Fokusebene für den der Detektionswirkungsgrad unter 100 % fällt ist für größere Partikel größer als für kleinere Partikel. Durch die Ermittlung des Detektionswirkungsgrads kann eine minimal aufzulösende Partikelgröße sowie diejenige minimale Partikelgröße bestimmt werden, die zu 100% detektiert werden kann.

Vorzugsweise weist die Schattenfotografieaufnahmevorrichtung eine effektive Messvolumentiefe $d$ auf, wobei die effektive Messvolumentiefe $d$ insbesondere abhängig ist von dem vordefinierten Kalibrierungspunktdurchmesser $d_{p\ real}$ und/oder von dem korrigierten Partikeldurchmesser $d_{p\ korrigiert}$.

Vorzugsweise ist die effektive Messvolumentiefe $d_{GS\ min}$ begrenzt durch den Wert der minimalen Gradientenneigung $GS_{min}$.

Vorzugsweise ist die effektive Messvolumentiefe $d_{GS\ min}$ definiert als ein maximaler Abstandsbereich des relativen Abstandes $z_i$ zu der Fokusebene, in der mindestens ein Kalibrierungspunkt mit korrespondierendem Kalibrierungspunktdurchmesser $d_{p\ real}$ und korrespondierender Gradientenneigung $GS$ gefunden wurde, wobei die korrespondierende Gradientenneigung GS größer oder gleich der minimalen Gradientenneigung $GS_{min}$ ist.

Vorzugsweise ist die effektive Messvolumentiefe $d_{GS\ min}$ gleich groß oder kleiner als eine maximale Messvolumentiefe $d_{CE=100\,\%}$, wobei die maximale Messvolumentiefe $d_{CE=100\,\%}$ einen maximalen Abstandsbereich des relativen Abstandes $z_i$ zu der Fokusebene umfasst, in der der Detektionswirkungsgrad $CE$ einem Wert von 100 % aufweist. Mit anderen Worten kann hierdurch angenommen werden, dass der Detektionswirkungsgrad $CE$ innerhalb der effektiven Messvolumentiefe $d_{GS\ min}$ einen Wert von 100% aufweist.

Vorzugsweise weist die minimale Gradientenneigung $GS_{min}$ einen Wert auf, so dass der Wert der effektiven Messvolumentiefe $d_{GS\ min}$ kleiner oder gleich groß ist wie der Wert der maximalen Messvolumentiefe $d_{CE=100\,\%}$ und wobei der Detektionswirkungsgrad $CE$ innerhalb der effektiven Messvolumentiefe $d_{GS\ min}$ einen Wert von 100% aufweist.

Vorzugsweise weist die hochauflösende Schattenfotografieaufnahmevorrichtung eine Vielzahl vordefinierter Bildabschnitte auf und die Kalibrierung wird auf jeden der Vielzahl vordefinierter Bildabschnitte angewendet. Hierdurch kann insbesondere eine ortsaufgelöste Kalibrierung und damit insbesondere eine ortsaufgelöste Bestimmung und Korrektur der Messwerte durchgeführt werden.

Vorzugsweise umfasst die Kalibrierungsvorrichtung eine Kalibrierplatte aus einem Glassubstrat mit einer Vielzahl von Kalibrierungspunkten an vordefinierten Positionen auf der Kalibrierplatte.

Vorzugsweise weisen die vordefinierten Kalibrierungspunktdurchmesser $d_{p\ real}$ der Kalibrierungspunkte der Kalibrierungsvorrichtung Größen von 3 $\mu$m bis 100 $\mu$m auf.

Vorzugsweise erfolgt eine Vordefinition der Vielzahl von vordefinierten Kalibrierungspunktdurchmessern $d_{p\ real}$ zu einem Kalibrierungspunkt durch den korrespondierenden gemessenen Kalibrierungspunktdurchmesser $d_{p\ roh}$, und/oder durch die vordefinierte Position des Kalibrierungspunktes auf der Kalibrierplatte. Hierdurch kann insbesondere eine Abhängigkeit zwischen einem korrespondierenden gemessenen Kalibrierungspunktdurchmesser $d_{p\ roh}$ und einer Vordefinition eines Kalibrierungspunktdurchmessers $d_{p\ real}$ eines Kalibrierungspunktes vermieden werden.

Vorzugsweise umfasst das Auswerten:

- Erstellen eines Rohbildes;

- Normalisieren des Rohbildes, insbesondere anhand eines vordefinierten Wertes *NorRad* zum Erhalt eines normalisierten Bildes;

- Anwenden eines Rauschfilters auf das normalisierte Bild zum Erhalt eines rauschreduzierten normalisierten Bildes;

- Binarisieren des rauschreduzierten normalisierten Bildes, insbesondere anhand eines vordefinierten Grenzwerts *BiThr* zum Erhalt eines binarisierten Bildes;

- Identifizieren von Partikelschatten, wobei ein Partikelschatten eine Partikelfläche und einen Partikelrand umfasst;

- Ermitteln einer Schattengrößenfläche, wobei die Schattengrößenfläche einer Anzahl von Pixeln entspricht, die ein Partikelschatten enthält;

- Festlegen einer minimalen Schattengrößenfläche, wobei die minimale Schattengrößenfläche einer minimalen Anzahl von Pixel entspricht, die ein Partikelschatten enthalten muss, um als ein Partikelschatten detektiert zu werden; und filtern des binarisierten Bildes hinsichtlich der minimalen Schattengrößenfläche.

Vorzugsweise umfasst die Normalisierung: Generieren eines Referenzbildes durch Anwendung eines sliding maximum filter einer vordefinierten Größe auf das Rohbild, wobei die vordefinierte Größe insbesondere einem vordefinierten Normalisierungsradius *NorRad* entspricht und Erstellen eines normalisierten Bildes durch Dividieren des Rohbildes durch das Referenzbild.

Nachfolgend wird die Erfindung anhand bevorzugter Ausführungsformen unter Bezugnahme der beigefügten Zeichnungen mehr erläutert.

Es zeigen:

Fig. 1 ein Ablaufplan einer beispielhaften Ausführungsform des erfindungsgemäßen Verfahrens;

Fig. 2 ein Diagramm der gemessenen Kalibrierungspunktdurchmesser und Gradientenneigung zu vordefinierten Kalibrierungspunktdurchmessern gemäß einer Ausführungsform des erfindungsgemäßen Verfahrens;

Fig. 3 ein Diagramm der Parameterräume der vordefinierten Kalibrierungspunktdurchmesser und der zu diesen Parameterräumen zugeordneten gemessenen Kalibrierungspunktdurchmesser mit korrespondierenden Gradientenneigungen gemäß einer Ausführungsform des erfindungsgemäßen Verfahrens;

Fig. 4 ein Diagramm des Detektionswirkungsgrades in Abhängigkeit zu einem Abstand zu der Fokusebene der Schattenfotografieaufnahmevorrichtung und der Größe eines vordefinierten Kalibrierungspunktdurchmessers gemäß dem erfindungsgemäßen Verfahren;

Fig. 5 ein Diagramm der Gradientenneigung in Abhängigkeit zu einem Abstand zu der Fokusebene der Schattenfotografieaufnahmevorrichtung und der Größe eines vordefinierten Kalibrierungspunktdurchmessers gemäß einer Ausführungsform des erfindungsgemäßen Verfahrens;

Fig. 6 ein Diagramm der maximalen Messvolumentiefe und der durch die minimale Gradientenneigung begrenzten effektiven Messvolumentiefe in Abhängigkeit zu der Größe eines vordefinierten Kalibrierungspunktdurchmessers gemäß einer Ausführungsform des erfindungsgemäßen Verfahrens.

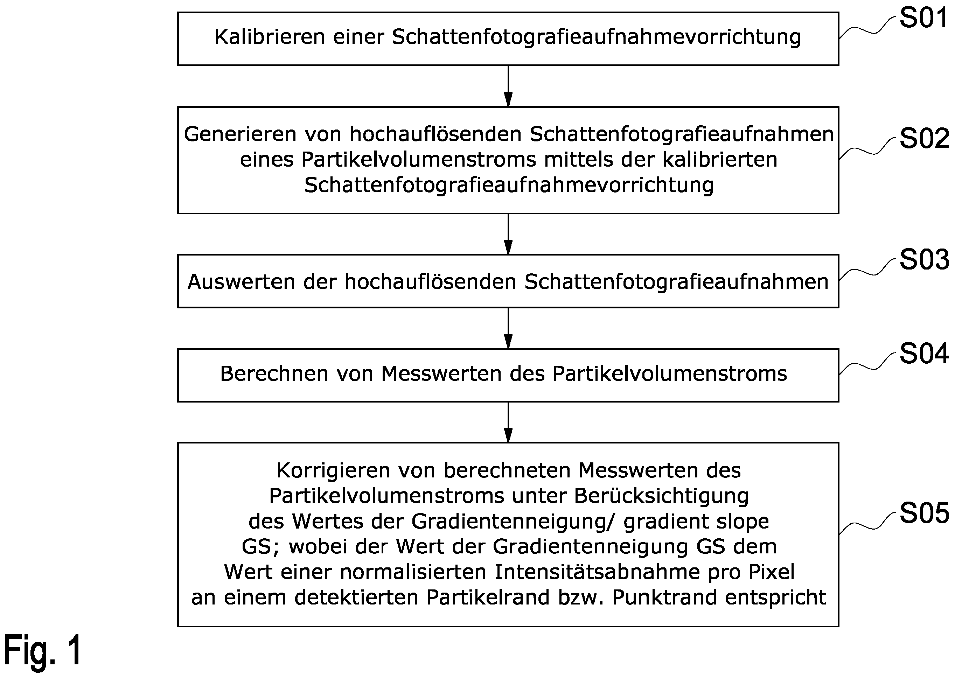

Bei einer beispielhaften Ausführungsform des erfindungsgemäßen Verfahrens, gezeigt in der Fig. 1, weist das Verfahren folgende Schritte auf:

Im Schritt S01 erfolgt ein Kalibrieren einer Schattenfotografieaufnahmevorrichtung.

Gemäß einer bevorzugten Ausführungsform umfasst der Schritt S01 des Kalibrierens die Ermittlung einer Fokusebene der Schattenfotografieaufnahmevorrichtung. Insbesondere erfolgt die Ermittlung einer Fokusebene der Schattenfotografieaufnahmevorrichtung entlang einer Objektivachse der Schattenfotografieaufnahmevorrichtung.

Vorzugsweise umfasst der Schritt S01 des Kalibrierens ferner die Bereitstellung einer Kalibrierungsvorrichtung, wobei die Kalibrierungsvorrichtung eine Vielzahl von Kalibrierungspunkten mit vordefinierten Kalibrierungspunktdurchmessern $d_{p\,real}$ aufweist. Mit anderen Worten weist jede der Vielzahl von Kalibrierungspunkten einen vordefinierten Durchmesser bzw. eine vordefinierte Größe auf. Insbesondere wird hierbei angenommen, dass die vordefinierten Kalibrierungspunktdurchmessern $d_{p\,real}$ den wahren Kalibrierungspunktdurchmessern entsprechen. Insbesondere entspricht der Wert eines vordefinierten Kalibrierungspunktdurchmessern $d_{p\,real}$ der Größe bzw. dem Durchmesser des Kalibrierungspunktes.

Vorzugsweise werden im Rahmen des Schrittes S01 des Kalibrierens hochauflösende Schattenfotografieaufnahmen der Kalibrierungsvorrichtung in vordefinierten Abständen $z_i$ zu der Fokusebene der Schattenfotografieaufnahmevorrichtung generiert. Vorzugsweise erfolgt das Generieren von hochauflösenden Schattenfotografieaufnahmen der Kalibrierungsvorrichtung in vordefinierten Abständen $z_i$ vor und/oder hinter der Fokusebene der Schattenfotografieaufnahmevorrichtung. Mit anderen Worten handelt es sich bei den vordefinierten Abständen $z_i$ zu der Fokusebene insbesondere um relative Abstände $z_i$ zu der Fokusebene der Schattenfotografieaufnahmevorrichtung.

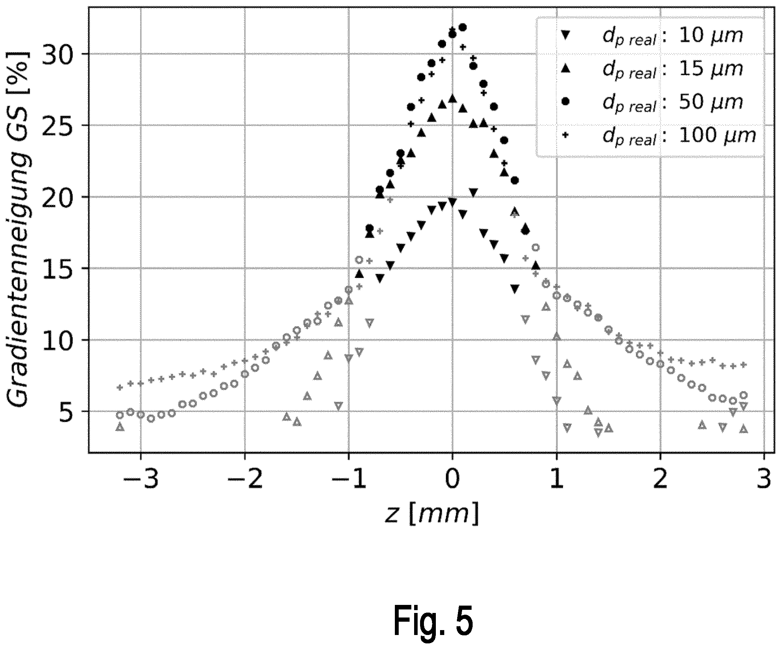

Vorzugsweise werden anhand der hochauflösenden Schattenfotografieaufnahmen sodann für jede der Vielzahl von Kalibrierungspunkten mit vordefinierten Kalibrierungspunktdurchmessern $d_{p\,real}$ und für jeden vordefinierten Abstand $z_i$ von der Fokusebene Kalibrierungspunktschatten ermittelt. Ferner erfolgt eine Ermittlung von gemessenen Kalibrierungspunktdurchmessern $d_{p\,roh}$ der Kalibrierungspunktschatten und eine Ermittlung einer Gradientenneigung $GS$ der jeweiligen Kalibrierungspunktschatten. Mit anderen Worten wird anhand der hochaufgelösten Schattenfotografieaufnahmen der Kalibrierungsvorrichtung, für jeden der Kalibrierungspunkte mit vordefiniertem Kalibrierungspunktdurchmesser $d_{p\,real}$ ein gemessener Kalibrierungspunktdurchmesser $d_{p\,roh}$ mit korrespondierender Gradientenneigung $GS$ ermittelt. Insbesondere ist der Wert der Gradientenneigung $GS$ proportional zum relativen Abstand $z_i$ von der Fokusebene (siehe Fig. 5). Insbesondere kann sich die Größe eines gemessenen Kalibrierungspunktdurchmessers $d_{p\,roh}$ von der Größe des vordefinierten Kalibrierungspunktdurchmessern $d_{p\,real}$ des jeweiligen Kalibrierungspunktes unterscheiden oder identisch mit diesem sein.

Vorzugsweise wird für jeden der Kalibrierungspunktschatten mit vordefinierten Kalibrierungspunktdurchmessern $d_{p\,real}$ eine maximale Gradientenneigung $GS_{max}$ ermittelt. Die maximale Gradientenneigung $GS_{max}$ entspricht einem oberen Grenzwert für die Gradientenneigung $GS$ der Kalibrierungspunktschatten in Abhängigkeit des vordefinierten Kalibrierungspunktdurchmessers $d_{p\,real}$.

Vorzugsweise wird anhand der Vielzahl von vordefinierten Kalibrierungspunktdurchmessern $d_{p\,real}$ und der korrespondierenden gemessenen Kalibrierungspunktdurchmesser $d_{p\,roh}$ und der korrespondierenden Gradientenneigungen $GS$ ein Verhältnis zwischen den vordefinierten Kalibrierungspunktdurchmessern $d_{p\,real}$, den gemessenen Kalibrierungspunktdurchmessern $d_{p\,roh}$ und der jeweiligen Gradientenneigung $GS$ ermittelt. Insbesondere wird hierdurch ein Zusammenhang bzw. eine Korrelation zwischen einem vordefinierten Kalibrierungspunktdurchmesser $d_{p\,real}$ eines Kalibrierungspunktes und der aus der hochauflösenden Schattenfotografieaufnahme ermittelten gemessenen Kalibrierungspunktdurchmesser $d_{p\,roh}$ und der korrespondierenden Gradientenneigungen GS ermittelt.

Gemäß einer Ausführungsform der vorliegenden Erfindung ergibt sich das Verhältnis des vordefinierten Kalibrierungspunktdurchmessers $d_{p\,real}$ und dem korrespondierenden gemessenen Kalibrierungspunktdurchmesser $d_{p\,roh}$ mit Gradientenneigung *GS* und Parametern a, b und c aus:

$$\frac{d_{p\,roh}}{d_{p\,real}} = a + b * e^{-c*\frac{GS}{GS_{max}}}, \qquad a, b, c = f\left(d_{p\,real}\right).$$

Vorzugsweise lassen sich die Parameter a, b und c aus einer Ausgleichsrechnung bzw. einer Ausgleichung, insbesondere einer zweidimensionalen Ausgleichsrechnung bzw. einer zweidimensionalen Ausgleichung des ermittelten Verhältnisses aus den vordefinierten Kalibrierungspunktdurchmessern $d_{p\,real}$ und korrespondierenden gemessenen Kalibrierungspunktdurchmesser $d_{p\,roh}$ ermitteln.

Gemäß einer Ausführungsform ergibt sich die maximale Gradientenneigung $GS_{max}$ mit Parametern f, g, h und i aus:

$$GS_{max} = f + \frac{g - f}{1 + (\frac{d_{p\,real}}{h})^i},$$

wobei sich die Parameter f, g, h und i ebenfalls aus einer Ausgleichsrechnung bzw. einer Ausgleichung ergeben. Insbesondere werden die Parameter f, g, h und i aus einem Fit des ermittelten Verhältnisses der vordefinierten Kalibrierungspunktdurchmesser $d_{p\,real}$ und korrespondierenden gemessenen Kalibrierungspunktdurchmesser $d_{p\,roh}$ ermittelt.

Gemäß der erfindungsgemäßen Ausführungsform umfasst der Schritt S01 des Kalibrierens ferner die Ermittlung eines korrespondierenden Parameterbereichs für jeden der Vielzahl von vordefinierten Kalibrierungspunktdurchmessern $d_{p\,real}$. Vorzugsweise erfolgt die Ermittlung des korrespondierenden Parameterbereichs anhand des ermittelten Verhältnisses des zwischen dem vordefinierten Kalibrierungs*punktdurchmesser* $d_{p\,real}$ und dem korrespondierenden gemessenen Kalibrierungspunktdurchmesser $d_{p\,roh}$ und der korrespondierenden Gradientenneigung *GS*, wobei jedem gemessenen Kalibrierungspunktdurchmesser $d_{p\,roh}$ mit korrespondierender Gradientenneigung *GS*, der sich innerhalb dieses korrespondierenden Parameterbereichs befindet, ein korrigierten Kalibrierungspunktdurchmesser $d_{p\,korrigiert}$ zugeordnet wird. Dabei entspricht der Wert des korrigierten Kalibrierungspunktdurchmessers $d_{p\,korrigiert}$ dem Wert des jeweiligen vordefinierten Kalibrierungspunktdurchmessers $d_{p\,real}$ dieses korrespondierenden Parameterbereichs.

Erfindungsgemäß erfolgt eine Begrenzung der ermittelten korrespondierenden Parameterbereiche durch eine minimale Gradientenneigung $GS_{min}$. Mit anderen Worten werden diejenigen gemessenen Kalibrierpunktdurchmesser $d_{p\,roh}$ zu einem vordefinierten Kalibrierungspunktdurchmesser $d_{p\,real}$, deren korrespondierende Gradientenneigung *GS* kleiner ist als die minimale Gradientenneigung $GS_{min}$, von der weiteren Betrachtung ausgeschlossen. Hierdurch wird gewährleistet, dass die Zuordnung eines korrigierten Kalibrierungspunktdurchmessers $d_{p\,korrigiert}$ auf Basis eines eindeutigen Zusammenhangs zwischen einem vordefinierten Kalibrierungspunktdurchmesser $d_{p\,real}$ und einem korrespondierenden gemessenen Kalibrierpunktdurchmesser $d_{p\,roh}$ erfolgt. Hierdurch wird die Genauigkeit der Kalibrierung weiter verbessert.

Vorzugsweise entspricht die minimale Gradientenneigung $GS_{min}$ einem unteren Grenzwert für die Gradientenneigung *GS*, bei der ein gemessener Kalibrierungspunktdurchmesser $d_{p\,roh}$ mit korrespondierender gemessener Gradientenneigung *GS*, eindeutig einem der korrespondierenden Parameterbereiche eines vordefinierten Kalibrierungspunktdurchmessers $d_{p\,real}$ zugeordnet werden kann. Hierdurch wird sichergestellt, dass nur diejenigen Kombinationen aus gemessenem Kalibrierungspunktdurchmesser $d_{p\,roh}$ und korrespondierender gemessener Gradientenneigung *GS* in die Kalibrierung mit einfließen, bei denen eine eindeutige Zuordnung zu einem der Kalibrierungspunkte mit vordefinierten Kalibrierungspunktdurchmessern erfolgen kann.

Vorzugsweise ist der Wert der minimalen Gradientenneigung $GS_{min}$ abhängig von dem gemessenen Kalibrierungspunktdurchmesser $d_{p\,roh}$ ist. Insbesondere ist der Wert der minimalen Gradientenneigung $GS_{min}$ für einen kleineren der gemessenen Kalibrierungspunktdurchmesser $d_{p\,roh}$ kleiner als für einen größeren gemessenen Kalibrierungspunktdurchmesser $d_{p\,roh}$.

Vorzugsweise weist jeder der korrespondierenden Parameterbereiche eine vordefinierte Breite auf. Bevorzugt weist die vordefinierte Breite der jeweiligen korrespondierenden Parameterbereiche einen Wert von im Wesentlichen 2.5 $\mu$m auf. Dabei ist die vordefinierte Breite nicht auf den Wert von 2.5 $\mu$m beschränkt und kann auch einen Wert kleiner oder größer als 2.5 $\mu$m aufweisen.

Im Schritt S02 erfolgt die Generierung von hochauflösenden Schattenfotografieaufnahmen eines Partikelvolumenstroms mittels der im Schritt S01 kalibrierten Schattenfotografieaufnahmevorrichtung.

Im Schritt S03 erfolgt eine Auswertung der hochauflösenden Schattenfotografieaufnahmen.

Gemäß einer Ausführungsform der vorliegenden Erfindung umfasst der Schritt S03 des Auswertens ferner die Erstellung eines Rohbildes. Anschließend folgt sodann eine Normalisierung dieses Rohbildes, insbesondere anhand eines vordefinierten Werts *NorRad* zum Erhalt eines normalisierten Bildes. Zudem wird zum Erhalt eines rauschreduzierten normalisierten Bildes, ein Rauschfilter auf das normalisierte Bild angewendet. Sodann erfolgt ein Binarisieren des rauschreduzierten normalisierten Bildes, insbesondere anhand eines vordefinierten Grenzwerts *BiThr* zum Erhalt eines binarisierten Bildes. Anschließend erfolgt die Identifizierung von Partikelschatten, wobei ein Partikelschatten eine Partikelfläche und einen Partikelrand umfasst.

Zudem erfolgt eine Ermittlung der Schattengrößenfläche, wobei die Schattengrößenfläche einer Anzahl an Pixeln entspricht, die einen Partikelschatten enthält. Ferner wird eine minimale Schattengrößenfläche festgelegt, wobei die minimale Schattengrößenfläche einer minimalen Anzahl an Pixeln entspricht, die einen Partikelschatten enthalten muss, um als ein Partikelschatten detektiert zu werden. Zudem erfolgt eine Filterung des binarisierten Bildes hinsichtlich der minimalen Schattengrößenfläche.

Im Schritt S04 erfolgt die Berechnung von Messwerten des Partikelvolumenstroms. Vorzugsweise umfasst die Berechnung von Messwerten des Partikelvolumenstroms die Berechnung einer Partikelanzahl, einer Partikelkonzentration, eines gemessenen Partikeldurchmessers und/oder einer Partikelgeschwindigkeit. Insbesondere ist das Berechnen von Messwerten des Partikelvolumenstroms nicht begrenzt auf die Berechnung der Partikelanzahl, der Partikelkonzentration, des gemessenen Partikeldurchmessers und/oder der Partikelgeschwindigkeit und es können auch weitere oder andere Messwerte ermittelt werden. Hierdurch kann die Wahl der berechneten Messwerte abhängig von der aktuellen Anforderung gewählt werden. Dadurch können die Flexibilität und Effizienz des Verfahrens gesteigert werden.

Schritt S05 erfolgt ein Korrigieren von berechneten Messwerten des Partikelvolumenstroms unter Berücksichtigung des Wertes der Gradientenneigung/ gradient slope GS. Dabei entspricht der Wert der Gradientenneigung GS dem Wert einer normalisierten Intensitätsabnahme pro Pixel an einem detektierten Partikelrand bzw. Punktrand.

Gemäß einer bevorzugten Ausführungsform umfasst der Schritt S05 des Korrigierens ferner die folgenden Schritte:

Ermitteln einer korrespondierenden Gradientenneigung *GS* für jeden gemessenen Partikeldurchmesser $d_{p\,roh}$. Dabei ist die korrespondierende Gradientenneigung *GS* größer ist als die minimale Gradientenneigung $GS_{min}$. Hierdurch werden für die Korrektur nur solche gemessenen Partikeldurchmesser $d_{p\,roh}$ und korrespondierenden Gradientenneigung *GS* berücksichtigt, für die im Rahmen des Schrittes S01 des Kalibrierens eine eindeutige Zuordnung zu einem vordefinierten Kalibrierungspunktdurchmessers $d_{p\,real}$ vorgenommen werden konnte.

Vorzugsweise wird ferner der Parameterbereich ermittelt innerhalb dessen sich der gemessene Partikeldurchmesser $d_{p\,roh}$ und die korrespondierende Gradientenneigung GS befinden. Insbesondere korrespondiert jeder Parameterbereich mit einem entsprechenden vordefinierten Kalibrierungspunktdurchmesser $d_{p\,real}$.

Vorzugsweise erfolgt sodann abhängig vom ermittelten Parameterbereich die Zuordnung eines korrigierten Partikeldurchmessers $d_{p\,korrigiert}$ für jeden der gemessenen Partikeldurchmesser $d_{p\,roh}$. Hierbei entspricht der Wert des korrigierten Partikeldurchmessers $d_{p\,korrigiert}$ dem Wert des vordefinierten Kalibrierungspunktdurchmessers $d_{p\,real}$ des Parameterbereichs. Insbesondere wird angenommen, dass die vordefinierten Kalibrierungspunktdurchmesser $d_{p\,real}$ der wahren Größe der Kalibrierungspunkte entsprechen und entsprechend die korrespondierenden Parameterbereiche in Zusammenhang mit der wahren Größe der Kalibrierungspunkte stehen. Im Rahmen der Korrektur werden sodann denjenigen gemessenen Partikeldurchmessern $d_{p\,roh}$, die sich in einem korrespondierenden Parameterbereich eines vordefinierten Kalibrierungspunktdurchmessers $d_{p\,real}$ zugeordnet. Hierdurch kann die Güte der Messung weiter verbessert werden.

Vorzugsweise ergibt sich die Genauigkeit der Ermittlung der korrigierten Partikeldurchmesser $d_{p\,korrigiert}$ aus:

$$\overline{\varepsilon_{d_{p\,korr}}} = \left| \frac{\sum_{i=1}^{n} \dfrac{d_{p\,korrigiert,i} - d_{p\,real}}{d_{p\,real}}}{n} \right|,$$

$$\sigma_{d_{p\,korr}} = \left| \sum_{i=1}^{n} \left( \frac{d_{p\,korrigiert,i} - d_{p\,real}}{d_{p\,real}} - \overline{\varepsilon_{d_{p\,korr}}} \right)^2 \right|.$$

Im Schritt S05 erfolgt eine Korrektur der berechneten Messwerte, insbesondere des gemessenen Partikeldurchmessers, unter Berücksichtigung des Wertes der Gradientenneigung *GS,* wobei der Wert der Gradientenneigung *GS* dem Wert der normalisierten Intensitätsabnahme pro Pixel an einem detektierten Punktrand bzw. Partikelrand entspricht. Gemäß einer Ausführungsform der vorliegenden Erfindung umfasst der Schritt S05 des Korrigierens ferner folgende Schritte: Ermitteln einer korrespondierenden Gradientenneigung *GS* für jeden gemessenen Partikeldurchmesser $d_{p\,roh}$, wobei die korrespondierende Gradientenneigung *GS* größer ist als die minimale Gradientenneigung $GS_{min}$. Ferner wird derjenige Parameterbereich ermittelt, innerhalb dessen sich der gemessene Partikeldurchmesser $d_{p\,roh}$ und die korrespondierende Gradientenneigung *GS* sich befinden.

Sodann wird jedem der gemessenen Partikeldurchmesser $d_{p\,roh}$ ein korrigierter Partikeldurchmesser $d_{p\,korrigiert}$ zugeordnet, wobei die Zuordnung abhängig vom ermittelten Parameterbereich erfolgt. Dabei entspricht der Wert des korrigierten Partikeldurchmessers $d_{p\,korrigiert}$ dem Wert des vordefinierten Kalibrierungspunktdurchmessers $d_{p\,real}$ des korrespondierenden Parameterbereichs.

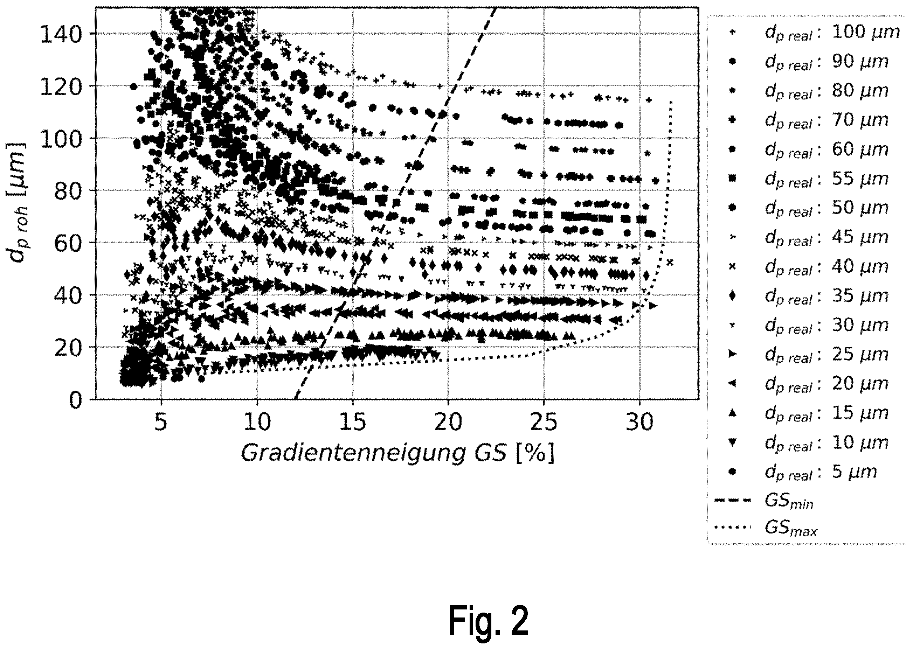

Die Figur 2 zeigt die gemäß einer Ausführungsform der vorliegenden Erfindung ermittelten Verhältnisse zwischen sechzehn verschiedenen vordefinierten Kalibrierungspunktdurchmessern $d_{p\,real}$ mit einer Größe zwischen 5 μm und 100 μm sowie den korrespondierenden gemessenen Kalibrierungspunktdurchmessern $d_{p\,roh}$ und den korrespondierenden Gradientenneigungen *GS.*

Ferner sind in der Figur 2, die gemäß einer Ausführungsform der vorliegenden Erfindung ermittelten maximalen Gradientenneigungen $GS_{max}$ und die ermittelte minimale Gradientenneigung $GS_{min}$ dargestellt. In der Figur 2 werden die 16 verschiedenen vordefinierten Kalibrierungspunktdurchmesser $d_{p\,real}$ jeweils durch 16 unterschiedliche Symbole repräsentiert. Der Wert der Gradientenneigung *GS* ist abhängig vom Abstand eines Kalibrierungspunktes von der Fokusebene der Schattenfotografieaufnahmevorrichtung. Insbesondere nimmt der Wert der Gradientenneigung *GS* mit zunehmendem Abstand zur Fokusebene ab. Wie in der Figur 2 zu sehen, hängt es von der Größe eines vordefinierten Kalibrierungspunktdurchmessers $d_{p\,real}$ sowie insbesondere von den optischen Eigenschaften der Schattenfotografieaufnahmevorrichtung ab, ob der Wert eines gemessenen Kalibrierungspunktdurchmessers $d_{p\,roh}$ mit abnehmendem Gradientendurchmesser *GS* größer oder kleiner wird.

In der Figur 2 ist die minimale Gradientenneigung $GS_{min}$ dargestellt als eine gestrichelte Linie, die einem unteren Grenzwert für die Gradientenneigung *GS* entspricht, bei der ein gemessener Kalibrierungspunktdurchmesser $d_{p\,roh}$ mit korrespondierender gemessener Gradientenneigung *GS* eindeutig einem der korrespondierenden vordefinierten Kalibrierungspunktdurchmesser $d_{p\,real}$ zugeordnet werden kann.

Wie in der Figur 2 zu sehen, hängt der Wert der maximalen Gradientenneigung $GS_{max}$ von der Größe eines vordefinierten Kalibrierungspunktdurchmessers $d_{p\,real}$ ab.

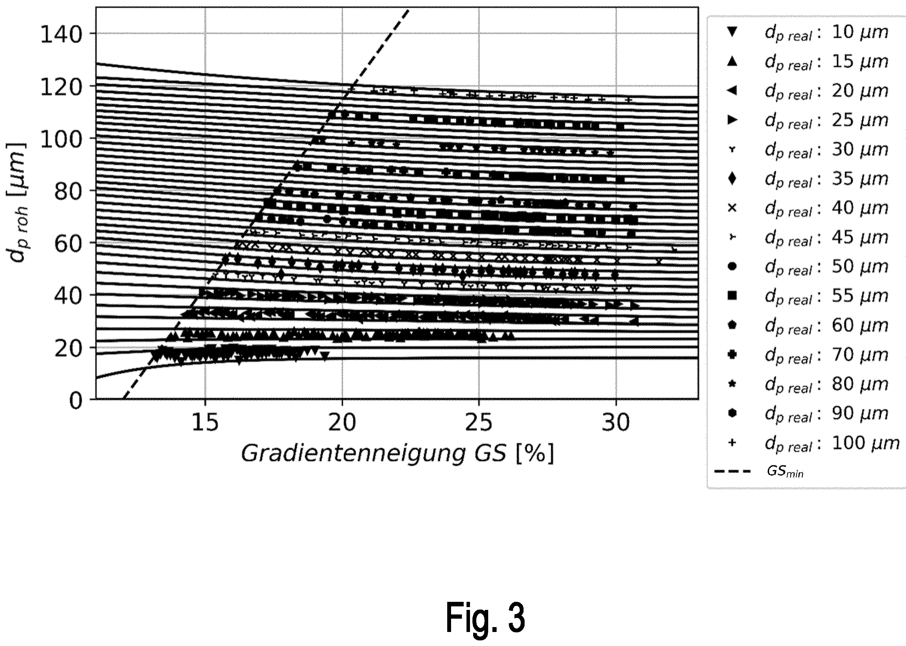

Die Figur 3 zeigt die für jeden der Vielzahl von vordefinierten Kalibrierungspunktdurchmessern $d_{p\,real}$ ermittelten korrespondierenden Parameterbereiche gemäß einer Ausführungsform der vorliegenden Erfindung. Die in der Figur 3 gezeigten korrespondierenden Parameterbereiche weisen eine Breite von 2.5 μm auf. Die Ermittlung eines jeweiligen korrespondierenden Parameterbereichs erfolgt insbesondere anhand des ermittelten Verhältnisses zwischen dem vordefinierten Kalibrierungspunktdurchmesser $d_{p\,real}$ und dem korrespondierenden gemessenen Kalibrierungspunktdurchmesser $d_{p\,roh}$ und der korrespondierenden Gradientenneigung GS. Sodann wird jedem gemessenen Kalibrierungspunktdurchmesser $d_{p\,roh}$, der sich innerhalb eines korrespondierenden Parameterbereichs zu einem der vordefinierten Kalibrierungspunktdurchmesser $d_{p\,real}$ befindet, der Wert dieses entsprechenden vordefinierten Kalibrierungspunktdurchmessers $d_{p\,real}$ zugewiesen. Wie in der Figur 3 zu sehen, sind die ermittelten korrespondierenden Parameterbereiche durch die minimale Gradientenneigung $GS_{min}$ begrenzt.

Die Schattenfotografieaufnahmevorrichtung weist ferner einen Detektionswirkungsgrad *CE* auf. Der Detektionswirkungsgrad *CE* ergibt sich aus der Anzahl $n_{p\,roh}$ der gemessenen Kalibrierungspunktdurchmesser $d_{p\,roh}$ für einen vordefinierten Kalibrierungspunktdurchmesser $d_{p\,real}$ und der Anzahl $n_{p\,ziel}$ von Kalibrierungspunkten für einen vordefinierten Kalibrierungspunktdurchmesser $d_{p\,real}$ auf einem ausgewählten Bereich der Kalibrierungsvorrichtung zu:

$$CE = \frac{n_{p\,roh}}{n_{p\,ziel}}\ .$$

Vorzugsweise erfolgt die Ermittlung des Detektionswirkungsgrads *CE* auf Basis der hochauflösenden Schattenfotografieaufnahmen der Kalibrierungsvorrichtung, insbesondere im Rahmen des Kalibrierens. Insbesondere kann der Detektionswirkungsgrad einen Wert zwischen 0% und 100% annehmen. Insbesondere kann der Detektionswirkungsgrad in relativen Abständen $z_i$ von größer als 1.5 mm einen Wert von größer als 100 % aufweisen, da in diesem Fall unscharfe Partikelschatten fälschlicherweise aufgeteilt und als mehrere Partikel detektiert werden. Insbesondere ist die Detektionswirkungsrate abhängig von dem Wert des vordefinierten Kalibrierungspunktdurchmessers $d_{p\,real}$ und von dem relativen Abstand $z_i$ zu der Fokusebene der Schattenfotografieaufnahmevorrichtung. Insbesondere werden umso weniger Partikel detektiert, desto größer der relative Abstand $z_i$ zu der Fokusebene ist. Derjenige relative Abstand $z_i$ zu der Fokusebene, für den der Detektionswirkungsgrad unter 100 % fällt, ist für größere Partikel größer als für kleinere Partikel. Durch die Ermittlung des Detektionswirkungsgrads kann eine minimal aufzulösende Partikelgröße sowie diejenige minimale Partikelgröße bestimmt werden, die zu 100% detektiert werden kann.

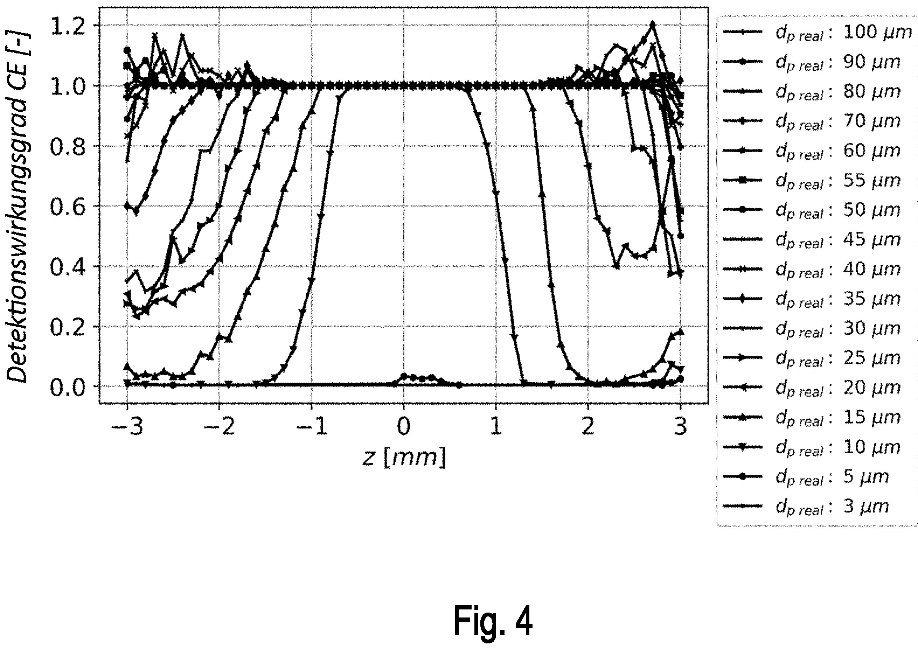

Die Figur 4 zeigt eine gemäß einer Ausführungsform der vorliegenden Erfindung ermittelten Detektionsrate $CE$ in Abhängigkeit von dem Abstand $z_i$ zu der Fokusebene der Schattenfotografieaufnahmevorrichtung und der Größe eines Kalibrierungspunktdurchmessers $d_{p\,real}$. Wie in der Figur 4 zu stehen, ist die Detektionsrate $CE$ für einen vordefinierten Kalibrierungspunktdurchmesser $d_{p\,real}$ abhängig von dem relativen Abstand zur Fokusebene $z_i$ der Schattenfotografieaufnahmevorrichtung. Dabei sinkt die Detektionswirkungsrate für kleinere vordefinierte Kalibrierungspunktdurchmesser $d_{p\,real}$ bereits bei einem kleineren Abstand $z_i$ von der Fokusebene der Schattenfotografieaufnahmevorrichtung als für einen größeren vordefinierten Kalibrierungspunktdurchmesser $d_{p\,real}$. Derjenige Abstandsbereich für jeden der individuellen vordefinierten Kalibrierungspunktdurchmesser $d_{p\,real}$ für den der Detektionswirkungsgrad $CE$ bei 100 % liegt definiert die maximale Messvolumentiefe $d_{CE=100\%}$ der Schattenfotografieaufnahmevorrichtung. Bei der Bestimmung der maximalen Messvolumentiefe $d_{CE=100\%}$ werden diejenigen Werte, die einen Detektionswirkungsgrad $CE$ von größer als 100 % aufweisen, nicht weiter berücksichtigt.

In der Figur 5 werden die gemäß einer Ausführungsform der vorliegenden Erfindung maximal ermittelte Gradientenneigung $GS_{max}$ in Abhängigkeit von dem relativen Abstand $z_i$ zu der Fokusebene der Schattenfotografieaufnahmevorrichtung und der jeweiligen Größe eines vordefinierten Kalibrierungspunktdurchmessers $d_{p\,real}$ gezeigt.

Dabei sind in der Figur 5 diejenigen gemessenen Kalibrierungspunktdurchmesser $d_{p\,roh}$, deren Gradientenneigung $GS$ kleiner sind als die minimale Gradientenneigung $GS_{min}$, gräulich dargestellt. Die effektive Messvolumentiefe ist abhängig von dem vordefinierten Kalibrierungspunktdurchmesser $d_{p\,real}$ und begrenzt durch den Wert der minimalen Gradientenneigung $GS_{min}$. In Abhängigkeit der Größe eines vordefinierten Kalibrierungspunktdurchmessers $d_{p\,real}$ entspricht die effektive Messvolumentiefe $d_{GS\,min}$ dem Abstandsbereich von der Fokusebene der Schattenfotografieaufnahmevorrichtung, innerhalb dessen ein korrespondierender gemessener Kalibrierungspunktdurchmesser $d_{p\,roh}$ eine korrespondierende Gradientenneigung $GS$ aufweist, die größer ist als die minimale Gradientenneigung $GS_{min}$. Dabei gilt stets, dass die effektive Messvolumentiefe $d_{GS\,min}$ gleichgroß oder kleiner ist als die maximale Messvolumentiefe $d_{CE=100\%}$, bei der der Detektionswirkungsgrad $CE$ einen Wert von 100 % aufweist.

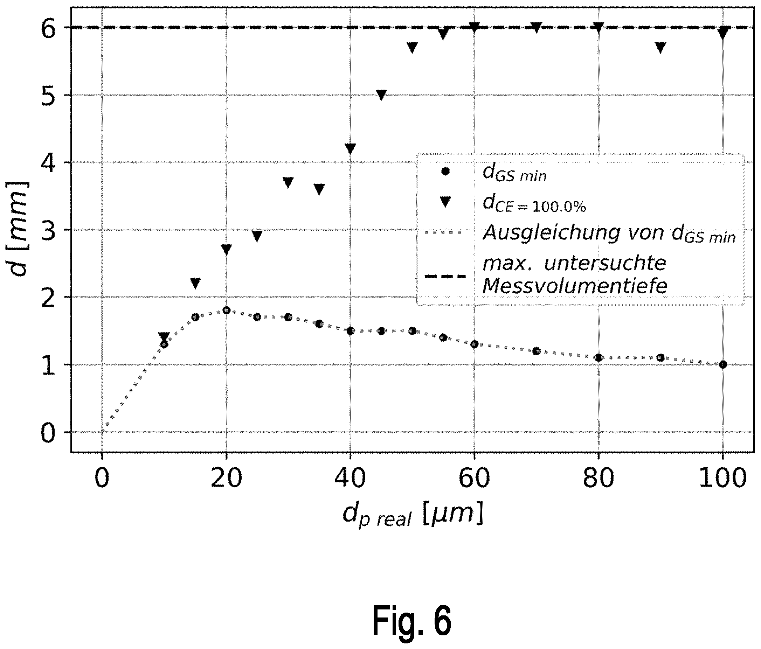

Die effektive Messvolumentiefe $d$ für unterschiedliche Begrenzungen ist in der Fig. 6 dargestellt. Die Figur 6 zeigt einen Vergleich der maximalen Messvolumentiefe $d_{CE=100\%}$ und der effektiven Messvolumentiefe $d_{GS\,min}$, die durch die minimale Gradientenneigung $GS_{min}$ limitiert wird, in Abhängigkeit des vordefinierten Kalibrierungspunktdurchmessers $d_{p\,real}$. Da für alle vordefinierten Kalibrierungspunktdurchmesser $d_{p\,real}$ gilt, dass die maximale Messvolumentiefe $d_{CE=100\%}$ größer oder gleich ist wie die effektive Messvolumentiefe $d_{GS\,min}$, kann davon ausgegangen werden, dass alle Partikel innerhalb der effektiven Messvolumentiefe $d_{GS\,min}$ erkannt werden. Vorzugsweise weist die minimale Gradientenneigung $GS_{min}$ einen Wert auf, so dass der Wert der effektiven Messvolumentiefe $d_{GS\,min}$ kleiner oder gleich groß ist wie der Wert der maximalen Messvolumentiefe $d_{CE=100\%}$ und wobei der Detektionswirkungsgrad $CE$ innerhalb der effektiven Messvolumentiefe $d_{GS\,min}$ einen Wert von 100% aufweist.

Die nach unten zeigenden Dreiecke repräsentieren die maximale effektive Messvolumentiefe $d_{CE=100}\%$, welche insbesondere durch lineare Anpassung angenähert bzw. durch einen linearen Fit ermittelt werden kann. Die durch die minimale Gradientenneigung $GS_{min}$ begrenzte effektive Messvolumentiefe $d_{GS\,min}$ ist durch Kreise **gekennzeichnet** und erreicht ein Maximum bei etwa 1.8 mm für vordefinierte Kalibrierungspunktdurchmesser mit einer Größe im Bereich von etwa 20 μm. Die durch die minimale Gradientenneigung $GS_{min}$ begrenzte effektive Messvolumentiefe $d_{GS\,min}$ nimmt sodann für Partikel mit einer Größe 30 μm ab und nähert sich dem Wert von 1 mm für größere vordefinierte Kalibrierungspunktdurchmesser $d_{p\,real}$. Wie in der Fig. 6 zu sehen, liegt der Wert der durch die minimale Gradientenneigung $GS_{min}$ begrenzten effektiven Messvolumentiefe $d_{GS\,min}$ für vordefinierte Kalibrierungspunktdurchmesser $d_{GS\,min}$ mit einer Größe von 100 μm bei etwa 1 mm.

Damit wird ein Verfahren zur Messwertkorrektur bei Messungen eines Partikelvolumenstroms mittels Schattenfotografie geschaffen, welches die Genauigkeit der berechneten Messwerte, wie beispielsweise der ermittelten Partikelgröße sowie des Messvolumens verbessert. Zudem wird ein Verfahren geschaffen, welches die zusätzlichen Einflüsse der gewählten Parameter wie des Grenzwerts zur Binarisierung kompensiert und berücksichtigt, wie hoch die Zählrate der einzelnen Partikelschatten ist.

**Patentansprüche**

1. Verfahren zur Messwertkorrektur bei Messungen eines Partikelvolumenstroms mittels Schattenfotografie, das Verfahren umfassend die Schritte:

   - Kalibrieren einer Schattenfotografieaufnahmevorrichtung;
   - Generieren von hochauflösenden Schattenfotografieaufnahmen eines Partikelvolumenstroms mittels der kalibrierten Schattenfotografieaufnahmevorrichtung;
   - Auswerten der hochauflösenden Schattenfotografieaufnahmen;

- Berechnen von Messwerten des Partikelvolumenstroms; und
- Korrigieren von berechneten Messwerten des Partikelvolumenstroms unter Berücksichtigung des Wertes der Gradientenneigung/ gradient slope *GS,* wobei der Wert der Gradientenneigung GS dem Wert einer normalisierten Intensitätsabnahme pro Pixel an einem detektierten Partikelrand bzw. Punktrand entspricht,

**dadurch gekennzeichnet, dass**
der Schritt des Kalibrierens ferner umfasst:

- Für jeden der Vielzahl von vordefinierten Kalibrierungspunktdurchmessern $d_{p\,real}$: Ermitteln eines korrespondierenden Parameterbereichs, anhand des ermittelten Verhältnisses zwischen dem vordefinierten Kalibrierungspunktdurchmesser $d_{p\,real}$ und dem korrespondierenden gemessenen Kalibrierungspunktdurchmesser $d_{p\,roh}$ und der korrespondierenden Gradientenneigung *GS,* wobei jedem gemessenen Kalibrierungspunktdurchmesser $d_{p\,roh}$ mit korrespondierender Gradientenneigung *GS,* der sich innerhalb dieses korrespondierenden Parameterbereichs befindet ein korrigierter Kalibrierungspunktdurchmesser $d_{p\,korrigiert}$ zugeordnet wird, wobei der Wert des korrigierten Kalibrierungspunktdurchmessers $d_{p\,korrigiert}$ dem Wert des jeweiligen vordefinierten Kalibrierungspunktdurchmessers $d_{p\,real}$ dieses korrespondierenden Parameterbereichs entspricht;
- Begrenzen der ermittelten korrespondierenden Parameterbereiche durch eine minimale Gradientenneigung $GS_{min}$.

2. Verfahren nach Anspruch 1, wobei das Berechnen von Messwerten des Partikelvolumenstroms umfasst: Berechnung einer Partikelanzahl, einer Partikelkonzentration, eines gemessenen Partikeldurchmessers und/oder einer Partikelgeschwindigkeit.

3. Verfahren nach Anspruch 1, wobei das Kalibrieren umfasst:

- Ermitteln einer Fokusebene der Schattenfotografieaufnahmevorrichtung, insbesondere entlang einer Objektivachse der Schattenfotografieaufnahmevorrichtung;
- Bereitstellen einer Kalibrierungsvorrichtung mit einer Vielzahl von Kalibrierungspunkten mit vordefinierten Kalibrierungspunktdurchmessern $d_{p\,real}$;
- Generieren von hochauflösenden Schattenfotografieaufnahmen der Kalibrierungsvorrichtung in vordefinierten Abständen $z_i$ zu der Fokusebene der Schattenfotografieaufnahmevorrichtung; und
- Für jede der Vielzahl von Kalibrierungspunkten mit vordefinierten Kalibrierungspunktdurchmessern $d_{p\,real}$ und für jeden vordefinierten Abstand $z_i$ von der Fokusebene: Ermitteln von Kalibrierungspunktschatten und Ermitteln von gemessenen Kalibrierpunktdurchmessern $d_{p\,roh}$ der Kalibrierungspunktschatten und Ermitteln einer Gradientenneigung *GS* der jeweiligen Kalibrierungspunktschatten;
- Ermitteln einer maximalen Gradientenneigung $GS_{max}$ für jeden der Kalibrierungspunktschatten mit vordefinierten Kalibrierungspunktdurchmessern $d_{p\,real}$, wobei die maximale Gradientenneigung $GS_{max}$ einem oberen Grenzwert für die Gradientenneigung *GS* der Kalibrierungspunktschatten in Abhängigkeit des vordefinierten Kalibrierungspunktdurchmessers $d_{p\,real}$ entspricht;
- Ermitteln eines Verhältnisses zwischen den vordefinierten Kalibrierungspunktdurchmessern $d_{p\,real}$, den gemessenen Kalibrierungspunktdurchmessern $d_{p\,roh}$ und der Gradientenneigung *GS* anhand der Vielzahl von vordefinierten Kalibrierungspunktdurchmessern $d_{p\,real}$ und der korrespondierenden gemessenen Kalibrierungspunktdurchmesser $d_{p\,roh}$ und der korrespondierenden Gradientenneigungen *GS*.

4. Verfahren nach Anspruch 3, wobei sich das Verhältnis des vordefinierten Kalibrierungspunktdurchmessers $d_{p\,real}$ und dem korrespondierenden gemessenen Kalibrierungspunktdurchmesser $d_{p\,roh}$ mit Gradientenneigung *GS* und Parametern a, b und c ergibt aus:

$$\frac{d_{p\,roh}}{d_{p\,real}} = a + b * e^{-c*\frac{GS}{GS_{max}}}, \qquad a, b, c = f\big(d_{p\,real}\big).$$

5. Verfahren nach Anspruch 4, wobei sich die Parameter a, b und c aus einer Ausgleichsrechnung bzw. Ausgleichung, insbesondere einer zweidimensionalen Ausgleichung des ermittelten Verhältnisses aus den vordefinierten Kalibrierungspunktdurchmessern $d_{p\,real}$ und korrespondierenden gemessenen Kalibrierungspunktdurchmesser $d_{p\,roh}$ ergeben.

6. Verfahren nach einem der Ansprüche 3 bis 4, wobei sich die maximale Gradientenneigung $GS_{max}$ mit Parametern f, g, h und i ergibt aus:

$$GS_{max} = f + \frac{g - f}{1 + (\frac{d_{p\,real}}{h})^i}.$$

7.  Verfahren nach Anspruch 6, wobei sich die Parameter f, g, h und i aus einer Ausgleichsrechnung bzw. Ausgleichung ergeben.

8.  Verfahren nach einem der Ansprüche 1 bis 7, wobei der korrespondierende Parameterbereich eine vordefinierte Breite aufweist.

9.  Verfahren nach Anspruch 8, wobei die vordefinierte Breite des korrespondierenden Parameterbereichs einen Wert von im Wesentlichen 2.5 $\mu$m aufweist.

10. Verfahren nach einem der Ansprüche 1 bis 9, wobei die minimale Gradientenneigung $GS_{min}$ einem unteren Grenzwert für die Gradientenneigung $GS$ entspricht, bei der ein gemessener Kalibrierungspunktdurchmesser $d_{p\,roh}$ mit korrespondierender gemessener Gradientenneigung $GS$ eindeutig einem der korrespondierenden Parameterbereiche eines vordefinierten Kalibrierungspunktdurchmessers $d_{p\,real}$ zugeordnet werden kann.

11. Verfahren nach einem der Ansprüche 1 bis 10, wobei der Wert der minimalen Gradientenneigung $GS_{min}$ abhängig von dem gemessenen Kalibrierungspunktdurchmesser $d_{p\,roh}$ ist.

12. Verfahren nach einem der vorhergehenden Ansprüche, wobei das Korrigieren umfasst:

    - Für jeden gemessenen Partikeldurchmesser $d_{p\,roh}$: Ermitteln einer korrespondierenden Gradientenneigung $GS$, wobei die korrespondierende Gradientenneigung $GS$ größer ist als die minimale Gradientenneigung $GS_{min}$;
    - Ermitteln des Parameterbereichs innerhalb dessen sich der gemessene Partikeldurchmesser $d_{p\,roh}$ und die korrespondierende Gradientenneigung $GS$ befinden;
    - Abhängig vom ermittelten Parameterbereich: Zuordnen eines korrigierten Partikeldurchmessers $d_{p\,korrigiert}$ für jeden der gemessenen Partikeldurchmesser $d_{p\,roh}$, wobei der Wert des korrigierten Partikeldurchmessers $d_{p\,korrigiert}$ dem Wert des vordefinierten Kalibrierungspunktdurchmessers $d_{p\,real}$ des Parameterbereichs entspricht.

13. Verfahren nach einem der Ansprüche 1 bis 11, wobei sich die Genauigkeit der Ermittlung der korrigierten Partikeldurchmesser $d_{p\,korrigiert}$ ergibt aus:

$$\overline{\varepsilon_{d_{p\,korr}}} = \left| \frac{\sum_{i=1}^{n} \frac{d_{p\,korrigiert,i} - d_{p\,real}}{d_{p\,real}}}{n} \right|,$$

$$\sigma_{d_{p\,korr}} = \left| \sum_{i=1}^{n} \left( \frac{d_{p\,korrigiert,i} - d_{p\,real}}{d_{p\,real}} - \overline{\varepsilon_{d_{p\,korr}}} \right)^2 \right|.$$

14. Verfahren nach einem der vorhergehenden Ansprüche, wobei die Schattenfotografieaufnahmevorrichtung einen Detektionswirkungsgrad $CE$ aufweist und sich der Detektionswirkungsgrad ergibt aus:

$$CE = \frac{n_{p\,roh}}{n_{p\,ziel}},$$

wobei $n_{p\,roh}$ der Anzahl der gemessenen Kalibrierungspunktdurchmesser für einen vordefinierten Kalibrierungspunktdurchmesser $d_{p\,real}$ entspricht und $n_{p\,ziel}$ der Anzahl von Kalibrierungspunkten für einen vordefinierten Kalibrierungspunktdurchmesser $d_{p\,real}$ auf einem ausgewählten Bereich der Kalibrierungsvorrichtung entspricht.

15. Verfahren nach einem der vorhergehenden Ansprüche, wobei die Schattenfotografieaufnahmevorrichtung eine effektive Messvolumentiefe $d$ aufweist, wobei die effektive Messvolumentiefe $d$ insbesondere abhängig ist von dem vordefinierten Kalibrierungspunktdurchmesser $d_{p\,real}$ und/oder von dem korrigierten Partikeldurchmesser $d_{p\,korrigiert}$.

16. Verfahren nach einem der vorhergehenden Ansprüche, wobei die effektive Messvolumentiefe $d_{GS\,min}$ gleich groß oder kleiner ist als eine maximale Messvolumentiefe $d_{CE=100\,\%}$, wobei die maximale Messvolumentiefe $d_{CE=100\,\%}$ einen maximalen Abstandsbereich des relativen Abstandes $z_i$ zu der Fokusebene umfasst, in der der Detektionswirkungsgrad $CE$ einem Wert von 100 % aufweist.

17. Verfahren nach einem der Ansprüche 1 bis 16, wobei die minimale Gradientenneigung $GS_{min}$ einen Wert aufweist, so dass der Wert der effektiven Messvolumentiefe $d_{GS\,min}$ kleiner oder gleich groß ist wie der Wert der maximalen Messvolumentiefe $d_{CE=100\,\%}$ und wobei der Detektionswirkungsgrad $CE$ innerhalb der effektiven Messvolumentiefe $d_{GS\,min}$ einen Wert von 100% aufweist.

18. Verfahren nach einem der vorhergehenden Ansprüche, wobei die hochauflösende Schattenfotografieaufnahmevorrichtung eine Vielzahl vordefinierter Bildabschnitte aufweist und die Kalibrierung auf jeden der Vielzahl vordefinierter Bildabschnitte angewendet wird.

19. Verfahren nach einem der vorhergehenden Ansprüche, wobei das Auswerten umfasst:

    - Erstellen eines Rohbildes;
    - Normalisieren des Rohbildes, insbesondere anhand eines vordefinierten Werts *NorRad* zum Erhalt eines normalisierten Bildes;
    - Anwenden eines Rauschfilters auf das normalisierte Bild zum Erhalt eines rauschreduzierten normalisierten Bildes;
    - Binarisieren des rauschreduzierten normalisierten Bildes, insbesondere anhand eines vordefinierten Grenzwerts *BiThr* zum Erhalt eines binarisierten Bildes;
    - Identifizieren von Partikelschatten, wobei ein Partikelschatten eine Partikelfläche und einen Partikelrand umfasst;
    - Ermitteln einer Schattengrößenfläche, wobei die Schattengrößenfläche einer Anzahl von Pixeln entspricht, die ein Partikelschatten enthält;
    - Festlegen einer minimalen Schattengrößenfläche, wobei die minimale Schattengrößenfläche einer minimalen Anzahl von Pixel entspricht, die ein Partikelschatten enthalten muss, um als ein Partikelschatten detektiert zu werden; und filtern des binarisierten Bildes hinsichtlich der minimalen Schattengrößenfläche.

## Claims

1. Method for correcting measurement values during measurements of a particle volume flow by means of shadowgraphy, the methods comprising the steps of:

    - calibrating a shadowgraphy imaging device;
    - generating high-resolution shadowgraphy images of a particle volume flow using the calibrated shadowgraphy imaging device;
    - evaluating of the high-resolution shadowgraphy images;
    - calculating measurement values of the particle volume flow; and
    - correcting calculated measurement values of the particle volume flow taking into account the value of the gradient slope GS, wherein the value of the gradient slope *GS* corresponds to the value of a normalized intensity decrease per pixel at a detected particle edge or point edge, **characterized in that** the step of calibrating further comprises:

    - for each of the plurality of predefined calibration point diameters $d_{p\,real}$: determining a corresponding parameter range on the basis determined ratio between the predefined calibration point diameter $d_{p\,real}$ and the corresponding measured calibration point diameter $d_{p\,raw}$ and the corresponding gradient slope *GS*, wherein each measured calibration point diameter $d_{p\,raw}$ with corresponding gradient slope *GS,* which is located within this corresponding parameter range, is assigned a corrected calibration point diameter $d_{p\,corrected}$, the value of the corrected Calibration point diameter $d_{p\,corrected}$ corresponding to the value of the respective predefined calibration point diameter $d_{p\,real}$ of this corresponding parameter range;

- limiting the determined corresponding parameter ranges by a minimum gradient slope $GS_{min}$

2. The method of claim 1, wherein calculating measurement values of particle volume flow rate comprises: calculating a particle count, a particle concentration, a measured particle diameter and/or a particle velocity.

3. The method according to claim 1, wherein the calibration comprises:

   - determining a focal plane of the shadowgraphy imaging device, in particular along a lens axis of the shadowgraphy imaging device;
   - providing a calibration device with a plurality of calibration points having predefined calibration point diameters $d_{p\ real}$;
   - generating high-resolution shadowgraphy images of the calibration device at predefined distances $z_i$ from the focal plane of the shadowgraphy imaging device; and
   - for each of the plurality of calibration points with predefined calibration point diameters $d_{p\ real}$ and for each predefined distance $z_i$ from the focal plane: Determining of calibration point shadows and determining of measured calibration point diameters $d_{p\ raw}$ of the calibration point shadows and determining of a gradient slope $GS$ of the respective calibration point shadows;
   - determining a maximum gradient slope $GS_{max}$ for each of the calibration point shadows with predefined calibration point diameters $d_{p\ real}$, wherein the maximum gradient slope $GS_{max}$ corresponds to an upper limit value for the gradient slope $GS$ of the calibration point shadows as a function of the predefined calibration point diameter $d_{p\ real}$;
   - determining a relationship between the predefined calibration point diameters $d_{p\ real}$, the measured calibration point diameters $d_{p\ raw}$ and the gradient slope $GS$ based on the plurality of predefined calibration point diameters $d_{p\ real}$ and the corresponding measured calibration point diameters $d_{p\ raw}$ and the corresponding gradient slopes $GS$.

4. The method according to claim 3, wherein the ratio of the predefined calibration point diameter $d_{p\ real}$ and the corresponding measured calibration point diameter $d_{p\ raw}$ with gradient slope $GS$ and parameters a, b and c is obtained from:

$$\frac{d_{p\ raw}}{d_{p\ real}} = a + b * e^{-c * \frac{GS}{GS_{max}}}, a, b, c = f(d_{p\ real}).$$

5. The method according to claim 4, wherein the parameters a, b and c result from an adjustment calculation or adjustment, in particular a two-dimensional adjustment of the ratio determined from the predefined calibration point diameters $d_{p\ real}$ and corresponding measured particle diameters $d_{p\ raw}$.

6. The method according to one of claims 3 to 4, wherein the maximum gradient slope $GS_{max}$ with parameters f, g, h and i is obtained from:

$$GS_{max} = f + \frac{g - f}{1 + (\frac{d_{p\ real}}{h})^i}.$$

7. The method according to claim 6, wherein the parameters f, g, h and i result from an adjustment calculation or adjustment.

8. The method according to any one of claims 1 to 7, wherein the corresponding parameter range has a predefined width.

9. The method according to claim 8, wherein the predefined width of the corresponding parameter range has a value of essentially 2.5 $\mu$m.

10. The method according to any one of the claims 1 to 9, wherein the minimum gradient slope $GS_{min}$ corresponds to a lower limit value for the gradient slope $GS$ at which a measured calibration point diameter $d_{p\ raw}$ with a corresponding measured gradient slope $GS$ can be unambiguously assigned to one of the corresponding parameter ranges of a predefined calibration point diameter $d_{p\ real}$.

11. The method according to any of claims 1 to 10, wherein the value of the minimum gradient slope $GS_{min}$ is dependent on the measured calibration point diameter $d_{p\ raw}$.

12. The method according to any one of the preceding claims, wherein the correction comprises:

   - for each measured particle diameter $d_{p\ raw}$: Determining a corresponding gradient slope $GS$, wherein the corresponding gradient slope $GS$ is greater than the minimum gradient slope $GS_{min}$;
   - determining the parameter range within which the measured particle diameter $d_{p\ raw}$ and the corresponding gradient slope $GS$ are located;
   - depending on the determined parameter range: Assigning a corrected particle diameter $d_{p\ corrected}$ for each of the measured particle diameters $d_{p\ raw}$, wherein the value of the corrected particle diameter $d_{p\ corrected}$ corresponds to the value of the predefined calibration point diameter $d_{p\ real}$ of the parameter range.

13. The method according to one of claims 1 to 11, wherein the accuracy of the determination of the corrected particle diameters $d_{p\ corrected}$ results from:

$$\overline{\varepsilon_{d_{p\ corr}}} = \left| \frac{\sum_{i=1}^{n} \dfrac{d_{p\ corrected,i} - d_{p\ real}}{d_{p\ real}}}{n} \right|,$$

$$\sigma_{d_{p\ corr}} = \left| \sum_{i=1}^{n} \left( \frac{d_{p\ corrected,i} - d_{p\ real}}{d_{p\ real}} - \overline{\varepsilon_{d_{p\ corr}}} \right)^2 \right|.$$

14. The method according to any one of the preceding claims, wherein the shadowgraphy imaging device has a detection efficiency degree $CE$ and the detection efficiency degree results from:

$$CE = \frac{n_{p\ raw}}{n_{p\ target}},$$

where $n_{p\ raw}$ corresponds to the number of measured calibration point diameters for a predefined calibration point diameter $d_{p\ real}$ and $n_{p\ target}$ corresponds to the number of calibration points for a predefined calibration point diameter $d_{p\ real}$ on a selected area of the calibration device.

15. The method according to any one of the preceding claims, wherein the shadowgraphy imaging device has an effective measurement volume depth d, wherein the effective measurement volume depth d is dependent in particular on the predefined calibration point diameter $d_{p\ real}$ and/or on the corrected particle diameter $d_{p\ corrected}$.

16. The method according to any one of the preceding claims, wherein the effective measurement volume depth $d_{GS\ min}$ is equal to or smaller than a maximum measurement volume depth $d_{CE=100\ \%}$, wherein the maximum measurement volume depth $d_{CE=100\ \%}$ comprises a maximum distance range of the relative distance $z_i$ to the focal plane in which the detection efficiency CE has a value of 100 %.

17. The method according to any of claims 1 to 16, wherein the minimum gradient slope $GS_{min}$ has a value such that the value of the effective measurement volume depth $d_{GS\ min}$ is less than or equal to the value of the maximum measurement volume depth $d_{CE=100\ \%}$ and wherein the detection efficiency degree $CE$ has a value of 100% within the effective measurement volume depth $d_{GS\ min}$.

18. The method according to any one of the preceding claims, wherein the high-resolution shadowgraphy imaging device comprises a plurality of predefined image sections, and the calibration is applied to each of the plurality of predefined image sections.

19. The method according to any one of the preceding claims, wherein the evaluation comprises:

- generating a raw image;
- normalizing the raw image, in particular using a predefined value *NorRad* to obtain a normalized image;
- applying a noise filter to the normalized image to obtain a noise-reduced normalized image;
- binarizing the noise-reduced normalized image, in particular using a predefined limit value *BiThr* to obtain a binarized image;
- identifying particle shadows, wherein a particle shadow comprises a particle surface and a particle edge;
- determining a shadow size area, wherein the shadow size area corresponds to a number of pixels that a particle shadow contains;
- defining a minimum shadow size area, wherein the minimum shadow size area corresponds to a minimum number of pixels that a particle shadow must contain in order to be detected as a particle shadow; and filtering the binarized image with respect to the minimum shadow size area.

**Revendications**

1. Procédé de correction des valeurs mesurées lors de mesures d'un flux volumique de particules par photographie d'ombres, le procédé comprenant les étapes consistant à :

   - étalonner un dispositif d'enregistrement de photographies d'ombres ;
   - générer des photographies d'ombres à haute résolution d'un flux volumique de particules au moyen du dispositif étalonné d'enregistrement de photographies d'ombres ;
   - évaluer les photographies d'ombres à haute résolution ;
   - calculer des valeurs de mesure du flux volumique de particules ; et
   - corriger les valeurs de mesure calculées du flux volumique de particules en tenant compte de la valeur de la pente de gradient / gradient slope *GS,* sachant que la valeur de la pente de gradient *GS* correspond à la valeur d'une diminution normalisée de l'intensité par pixel au niveau d'un bord de particule ou d'un bord de point détecté,

   **caractérisé en ce que**
   l'étape d'étalonnage consiste en outre à :

   - pour chacun de la pluralité de diamètres de point d'étalonnage prédéfinis $d_{p\,real}$ : déterminer une plage de paramètres correspondante à l'aide du rapport déterminé entre le diamètre de point d'étalonnage prédéfini $d_{p\,real}$ et le diamètre de point d'étalonnage mesuré correspondant $d_{p\,roh}$ et la pente de gradient correspondante *GS,* sachant qu'un diamètre de point d'étalonnage corrigé $d_{p\,korrigiert}$ est associé à chaque diamètre de point d'étalonnage mesuré $d_{p\,roh}$ avec une pente de gradient correspondante *GS,* lequel se trouve au sein de cette plage de paramètres correspondante, et que la valeur du diamètre de point d'étalonnage corrigé $d_{p\,korrigiert}$ correspond à la valeur du diamètre de point d'étalonnage prédéfini respectif $d_{p\,real}$ de cette plage de paramètres correspondante ;
   - délimiter les plages de paramètres correspondantes déterminées par une pente de gradient minimale $GS_{min}$.

2. Procédé selon la revendication 1,
   dans lequel le calcul de valeurs de mesure du flux volumique de particules consiste à : calculer un nombre de particules, une concentration de particules, un diamètre de particule mesuré et/ou une vitesse de particules.

3. Procédé selon la revendication 1,
   dans lequel l'étalonnage consiste à :

   - déterminer un plan focal du dispositif d'enregistrement de photographies d'ombres, en particulier le long d'un axe de l'objectif du dispositif d'enregistrement de photographies d'ombres ;
   - fournir un dispositif d'étalonnage comprenant une pluralité de points d'étalonnage avec des diamètres de point d'étalonnage prédéfinis $d_{p\,real}$ ;
   - générer des photographies d'ombres à haute résolution du dispositif d'étalonnage à des distances prédéfinies $z_i$ par rapport au plan focal du dispositif d'enregistrement de photographies d'ombres ; et
   - pour chacun de la pluralité de points d'étalonnage ayant des diamètres de point d'étalonnage prédéfinis $d_{p\,real}$ et pour chaque distance prédéfinie $z_i$ par rapport au plan focal : déterminer des ombres de point d'étalonnage et déterminer des diamètres de point d'étalonnage mesurés $d_{p\,roh}$ des ombres de point d'étalonnage et déterminer une pente de gradient GS des ombres de point d'étalonnage respectives ;
   - déterminer une pente de gradient maximale $GS_{max}$ pour chacune des ombres de point d'étalonnage ayant des diamètres de point d'étalonnage prédéfinis $d_{p\,real}$, sachant que la pente de gradient maximale $GS_{max}$ correspond à une valeur limite supérieure de la pente de gradient $GS$ des ombres de point d'étalonnage en fonction du diamètre de point d'étalonnage prédéfini $d_{p\,real}$ ;

- déterminer un rapport entre les diamètres de point d'étalonnage prédéfinis $d_{p\,real}$, les diamètres de point d'étalonnage mesurés $d_{p\,roh}$ et la pente de gradient $GS$ à l'aide de la pluralité de diamètres de point d'étalonnage prédéfinis $d_{p\,real}$ et des diamètres de point d'étalonnage mesurés correspondants $d_{p\,roh}$ et des pentes de gradient $GS$ correspondantes.

**4.** Procédé selon la revendication 3,
dans lequel le rapport du diamètre de point d'étalonnage prédéfini $d_{p\,real}$ et du diamètre de point d'étalonnage mesuré correspondant $d_{p\,brut}$ avec la pente de gradient $GS$ et les paramètres a, b et c résulte de :

$$\frac{d_{p\,roh}}{d_{p\,real}} = a + b * e^{-c*\frac{GS}{GS_{max}}}, \qquad a, b, c = f\left(d_{p\,real}\right).$$

**5.** Procédé selon la revendication 4,
dans lequel les paramètres a, b et c résultent d'un calcul de compensation ou d'une compensation, en particulier d'une compensation bidimensionnelle du rapport déterminé à partir des diamètres de point d'étalonnage prédéfinis $d_{p\,real}$ et des diamètres de point d'étalonnage mesurés correspondants $d_{p\,roh}$.

**6.** Procédé selon l'une des revendications 3 à 4,
dans lequel la pente de gradient maximale $GS_{max}$ avec des paramètres f, g, h et i résulte de :

$$GS_{max} = f + \frac{g - f}{1 + (\frac{d_{p\,real}}{h})^i}$$

**7.** Procédé selon la revendication 6,
dans lequel les paramètres f, g, h et i résultent d'un calcul de compensation ou d'une compensation.

**8.** Procédé selon l'une des revendications 1 à 7,
dans lequel la plage de paramètres correspondante présente une largeur prédéfinie.

**9.** Procédé selon la revendication 8,
dans lequel la largeur prédéfinie de la plage de paramètres correspondante a une valeur sensiblement égale à 2,5 μm.

**10.** Procédé selon l'une des revendications 1 à 9,
dans lequel la pente de gradient minimale $GS_{min}$ correspond à une valeur limite inférieure de la pente de gradient $GS$ pour laquelle un diamètre de point d'étalonnage mesuré $d_{p\,roh}$ avec une pente de gradient mesurée correspondante $GS$ peut être associé sans ambiguïté à l'une des plages de paramètres correspondantes d'un diamètre de point d'étalonnage prédéfini $d_{p\,real}$.

**11.** Procédé selon l'une des revendications 1 à 10,
dans lequel la valeur de la pente de gradient minimale $GS_{min}$ est fonction du diamètre de point d'étalonnage mesuré $d_{p\,roh}$.

**12.** Procédé selon l'une des revendications précédentes,
dans lequel la correction consiste à :

- pour chaque diamètre de particule mesuré $d_{p\,roh}$ : déterminer une pente de gradient correspondante $GS$, la pente de gradient correspondante $GS$ étant supérieure à la pente de gradient minimale $GS_{min}$ ;
- déterminer la plage de paramètres au sein de laquelle se trouvent le diamètre de particule mesuré $d_{p\,roh}$ et la pente de gradient correspondante $GS$ ;
- en fonction de la plage de paramètres déterminée : associer un diamètre de particule corrigé $d_{p\,korrigiert}$ pour chacun des diamètres de particule mesurés $d_{p\,roh}$, sachant que la valeur du diamètre de particule corrigé $d_{p\,korrigiert}$ correspond à la valeur du diamètre de point d'étalonnage prédéfini $d_{p\,real}$ de la plage de paramètres.

**13.** Procédé selon l'une des revendications 1 à 11,
dans lequel la précision de la détermination des diamètres de particule corrigés $d_{p\,korrigiert}$ résulte de :

$$\overline{\varepsilon_{d_{p\,korr}}} = \left| \frac{\sum_{i=1}^{n} \frac{d_{p\,korrigiert,i} - d_{p\,real}}{d_{p\,real}}}{n} \right|,$$

$$\sigma_{d_{p\,korr}} = \left| \sum_{i=1}^{n} \left( \frac{d_{p\,korrigiert,i} - d_{p\,real}}{d_{p\,real}} - \overline{\varepsilon_{d_{p\,korr}}} \right)^2 \right|$$

**14.** Procédé selon l'une des revendications précédentes,

dans lequel le dispositif d'enregistrement de photographies d'ombres présente une efficacité de détection *CE,* et l'efficacité de détection résulte de :

$$CE = \frac{n_{p\,roh}}{n_{p\,ziel}}$$

où $n_{p\,roh}$ correspond au nombre de diamètres de point d'étalonnage mesurés pour un diamètre de point d'étalonnage prédéfini $dp_{real}$, et $n_{p\,ziel}$ correspond au nombre de points d'étalonnage pour un diamètre de point d'étalonnage prédéfini $d_{p\,real}$ sur une zone sélectionnée du dispositif d'étalonnage.

**15.** Procédé selon l'une des revendications précédentes,
dans lequel le dispositif d'enregistrement de photographies d'ombres présente une profondeur de volume de mesure effective *d,* en particulier la profondeur de volume de mesure effective *d* étant fonction du diamètre de point d'étalonnage prédéfini $d_{p\,real}$ et/ou du diamètre de particule corrigé *dp korrigiert.*

**16.** Procédé selon l'une des revendications précédentes,
dans lequel la profondeur de volume de mesure effective $d_{GS\,min}$ est égale ou inférieure à une profondeur de volume de mesure maximale $d_{CE=100\,\%}$, la profondeur de volume de mesure maximale $d_{CE=100\,\%}$ comprenant une plage de distance maximale de la distance relative $z_i$ par rapport au plan focal dans lequel l'efficacité de détection *CE* présente une valeur de 100 %.

**17.** Procédé selon l'une des revendications 1 à 16,
dans lequel la pente de gradient minimale $GS_{min}$ a une valeur telle que la valeur de la profondeur de volume de mesure effective $d_{GS\,min}$ est inférieure ou égale à la valeur de la profondeur de volume de mesure maximale $d_{CE=100\,\%}$, et l'efficacité de détection *CE* au sein de la profondeur de volume de mesure effective $d_{GS\,min}$ a une valeur de 100 %.

**18.** Procédé selon l'une des revendications précédentes,
dans lequel le dispositif d'enregistrement de photographies d'ombres à haute résolution comprend une pluralité de parties d'image prédéfinies, et l'étalonnage est appliqué à chacune de la pluralité de parties d'image prédéfinies.

**19.** Procédé selon l'une des revendications précédentes,
dans lequel l'évaluation consiste à :

- créer une image brute ;
- normaliser l'image brute, en particulier à l'aide d'une valeur prédéfinie *NorRad* pour obtenir une image normalisée ;
- appliquer un filtre de bruit à l'image normalisée pour obtenir une image normalisée à bruit réduit ;
- binariser l'image normalisée à bruit réduit, en particulier à l'aide d'une valeur limite prédéfinie *BiThr* pour obtenir une image binarisée ;

- identifier des ombres de particules, une ombre de particule comprenant une surface de particule et un bord de particule ;
- déterminer une surface de taille d'ombre, la surface de taille d'ombre correspondant à un nombre de pixels qu'une ombre de particule contient ;
- fixer une surface minimale de taille d'ombre, la surface minimale de taille d'ombre correspondant à un nombre minimal de pixels qu'une ombre de particule doit contenir pour être détectée comme une ombre de particule ; et filtrer l'image binarisée quant à la surface minimale de taille d'ombre.

| Kalibrieren einer Schattenfotografieaufnahmevorrichtung | S01 |

$\downarrow$

| Generieren von hochauflösenden Schattenfotografieaufnahmen eines Partikelvolumenstroms mittels der kalibrierten Schattenfotografieaufnahmevorrichtung | S02 |

$\downarrow$

| Auswerten der hochauflösenden Schattenfotografieaufnahmen | S03 |

$\downarrow$

| Berechnen von Messwerten des Partikelvolumenstroms | S04 |

$\downarrow$

| Korrigieren von berechneten Messwerten des Partikelvolumenstroms unter Berücksichtigung des Wertes der Gradientenneigung/ gradient slope GS; wobei der Wert der Gradientenneigung GS dem Wert einer normalisierten Intensitätsabnahme pro Pixel an einem detektierten Partikelrand bzw. Punktrand entspricht | S05 |

Fig. 1

Fig. 2

EP 4 249 891 B1

Fig. 3

**Fig. 4**

EP 4 249 891 B1

Fig. 5

EP 4 249 891 B1

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **AUS SANG YONG LEE et al.** Sizing of Spary Particles using image processing technique. *Journal of Medical Science and Technology*, 01 June 2004, 879-894